# EUROPÄISCHE PATENTSCHRIFT

(11) **EP 0 575 901 B1**
(45) Veröffentlichungstag und Bekanntmachung des Hinweises auf die Patenterteilung: **14.05.1997**
(21) Anmeldenummer: 93109751.3
(22) Anmeldetag: 18.06.1993
(51) Int. Cl.: B23B 27/16

(54) **Schneidwerkzeug zum Einstechen, Abstechen oder Gewindeschneiden**
Cutting tool for slotting, cutting off and thread cutting
Outil de coupe pour le rainurage, le décolletage et le filetage

(30) Priorität: 24.06.1992 DE 4220548
(43) Veröffentlichungstag der Anmeldung: 29.12.1993
(73) Patentinhaber: CERASIV GmbH INNOVATIVES KERAMIK-ENGINEERING, D-73207 Plochingen (DE)
(72) Erfinder: Vetter, Diethelm, D-7000 Stuttgart 61 (DE)
(74) Vertreter: Scherzberg, Andreas, Dr.

(56) Entgegenhaltungen:
- DE-A- 2 201 237

## Beschreibung

Die Erfindung betrifft ein Schneidwerkzeug zum Einstechen, Abstechen oder Gewindeschneiden, bestehend aus einem Schneidplattenhalter mit einer Ausnehmung zur Aufnahme einer Wendeschneidplatte im Bereich seines Spannkopfes sowie einer als Vielkantplatte ausgeführten Wendeschneidplatte mit konisch ausgesenkter Befestigungsbohrung, die hochkant in der Ausnehmung angeordnet und über eine Spannvorrichtung mit dem Spannkopf verbunden ist.

Der Aufbau von Schneidwerkzeugen zum Einstechen, Abstechen oder Gewindeschneiden ist in den wesentlichen Merkmalen identisch. Der Einfachheit halber wird nachstehend daher immer von Stechstahl gesprochen, ohne die Erfindung damit einzuschränken.

Aus der DE-OS 31 33 029 ist ein Stechstahl bekannt, der eine prismatische Form aufweist und durch eine Keilklemmung mit dem Stahlhalter verbunden ist. Die Aufnahme des Schneidstahleinsatzes ist dabei komplementär zur Form des Prismas des Schneideinsatzes ausgebildet, um eine Zentrierung zu erreichen.

Aus der DE-PS 31 14 460 ist ein Stechstahl bekannt, der als Schneideinsatz eine hochkant stehende parallelogrammförmige Schneidplatte aufweist, die als Lochschneidplatte mit konischer Aussenkung des Befestigungsloches ausgeführt ist.

Die DE-OS 15 52 292 beschreibt einen Stechstahlhalter mit abgesetzter Klemmpratze, bei dem der Schneideinsatz in einer Prismenauflage gehalten wird.

Die US-PS 4,169,690 beschreibt u. a. einen Stechstahl, bei dem der Schneideinsatz als hochkant stehende Wendeschneidplatte mit Befestigungsbohrung ausgeführt ist, wobei seitlich eine Spannpratze angeordnet ist, die mit einem Ende in die Spannbohrung der Wendeschneidplatte eingreift.

Die Entwicklung ist, wie aus dem vorgenannten Stand der Technik zu entnehmen, inzwischen verstärkt auf das Prinzip hochkant stehender Schneidplatten übergegangen, da der Vorteil dieser Technologie darin besteht, daß mehr als zwei Schneiden mit positivem Freiwinkel gegenüber herkömmlichen Schneidplatten genutzt werden können. Am Markt hat sieh dabei zur Befestigung der hochkant stehenden Schneidplatten die seitliche Verschraubung durchgesetzt. Das erfordert jedoch beim Wechsel abgenutzter Schneiden genügend Raum am Klemmhalter für die Handhabung von Werkzeugen. Wegen des begrenzt zur Verfügung stehenden Arbeitsraumes einerseits und wegen der Behinderung des Spanabflusses andererseits sind die bekannten Lösungen jedoch nachteilig.

Aufgabe der vorliegenden Erfindung ist daher, einen Stechstahlhalter zu schaffen, bei dem die Schneidplatten auf engstem Raum gewechselt werden können und bei dem der Spanabfluß nicht behindert wird.

Bei einem gattungsgemäßen Schneidwerkzeug wird diese Aufgabe durch die Merkmale des kennzeichnenden Teils des Hauptanspruches gelöst.

Das wesentlichste Kriterium beim Schneidwerkzeug ist die Sicherheit, mit der die Schneidplatte im Plattensitz gehalten wird. Dabei muß bei Stechstählen beachtet werden, daß nicht nur radiale Einstiche, sondern auch in gewissem Maße Kantenverrundungen hergestellt werden, also sogenannte Konturen, d. h., daß die Klemmung auch bei seitlich angreifenden Kräften der Schneidplatte keine Möglichkeit der Verschiebung oder Drehung geben darf. Durch die Ausnehmung im Spannkopf des Stechstahlhalters wird die Wendeschneidplatte geführt. Der durch den Spannkopf in die Bohrung der Wendeschneidplatte eingreifende Finger drückt die Wendeschneidplatte zum einen in die seitliche Führung der Ausnehmung, sie liegt also an ihrem Umfang an, zum anderen gegen die Auflage, so daß eine Deckfläche der Schneidplatte auf dieser Auflage liegt. Die Wendeschneidplatte wird damit, ohne daß der Stechstahl seitlich durch Spannvorrichtungen verbreitert wird, sicher gespannt. Die Schneidplatte ist damit auch auf engem Raum auszutauschen.

Das Spannen der Schneidplatte erfolgt wie beschrieben durch eine Klemmpratze, wobei diese Klemmpratze auf dem Stechstahlhalter angeordnet ist. Sie überdeckt jedoch nicht, wie sonst allgemein üblich, die Schneidplatte bzw. einen Teil der Schneidplatte, sondern ist neben der Schneidplatte angeordnet, d. h., daß der Spanabfluß durch die Klemmpratze nicht beeinträchtigt wird, weil die Klemmpratze durch eine Nut mit dem Spannfinger in die Bohrung der Wendeschneidplatte eingreift. Von Vorteil ist weiterhin dabei, daß die Klemmpratze trotzdem keine komplizierte Ausgestaltung aufweist und damit sich sowohl durch mechanische Fertigung einfach herstellen läßt als auch als Gußteil erstellt werden kann.

Der Spannfinger weist vorteilhaft an seinem äußeren Ende eine nach unten gewinkelte Nase auf, die zweckmäßig mit einer gewolbten Innenfläche versehen ist. Die gewölbte Innenfläche liegt dabei an der Aussenkung der Befestigungsbohrung der Wendeschneidplatte an, wobei durch die Ausgestaltung der Wölbung der Innenfläche es möglich ist, eine punktförmige Anlage zu erreichen, d. h. eine Anlage, bei der ein vollkommener Ausgleich der Lage der Schneidplatte in der Ausnehmung möglich ist. In diesem Falle ist die Innenfläche ballig ausgeführt. Es ist aber auch möglich, einen linienförmigen Eingriff zwischen Aussenkung und Spannfingernase durch Ausführung der Innenflache als Teilzylinder mit kleinem Radius zu erreichen. Wenn dagegen sehr große Kräfte übertragen werden müssen, empfiehlt sich der flächige Eingriff zwischen Aussenkung und Innenfläche. In diesem Fall ist ein identischer Radius von Aussenkung und Innenfläche erforderlich.

Auf der dem Spannfinger gegenüberliegenden Seite ist die Klemmpratze mit einem Gleitansatz versehen, der als Halbzylinder oder Halbtonne ausgeführt ist. Die Halbtonne ist dabei ballig, so daß sich bei Auflage auf dem Spannkopf hier nur eine punktförmige Berührung ergibt und damit die Selbstjustierung des Halters, d. h. der Klemmpratze ohne Überbestimmung ermöglicht. Wird der Gleitansatz als Halbzylinder ausgeführt, so ergibt sich am Klemmkopf eine linienförmige Auflage, durch die die Klemmpratze in ihrer Position festgelegt wird.

Der Angriff des Gleitansatzes der Klemmpratze erfolgt zweckmäßig an einer Schräge, die der Ausnehmung im Spannkopf gegenüberliegt. Der Gleitansatz hat dadurch die Möglichkeit, beim Anziehen der Spannschraube an der Schräge nach unten zu gleiten, wodurch die Klemmpratze sich in Richtung der Schräge verschiebt und die Nase mit der Innenfläche die Schneidplatte andrückt.

Der Spannfinger als solcher taucht in einer im Spannkopf befindlichen Nut ein, wodurch der Zugang des Spannfingers in die Bohrung der Wendeschneidplatte von deren Auflage aus möglich ist. Der Spannfinger und damit die im Spannkopf befindliche Nut verläuft zweckmäßig unter einem Winkel zur Mittellinie der in der Wendeschneidplatte eingebrachten Bohrung, wobei dieser Winkel vorteilhaft zwischen 1 und 10 Grad liegt. Durch den Verlauf des Spannfingers unter diesem Winkel ist sichergestellt, daß beim Spannvorgang die auf die Nase des Spannfingers wirkende Kraft nicht nur nach unten und durch das Zurückziehen der Klemmpratze über die Schräge mittels des Gleitansatzes nach hinten, sondern in begrenztem Maße auch zur Seite wirkt. Die Schneidplatte wird dadurch zusätzlich an die Seitenflächen der Ausnehmung angepreßt.

In einer weiteren vorteilhaften Ausführung der Erfindung ist die seitlich zur Wendeschneidplatte angeordnete Klemmpratze im Spannkopf versenkt, wodurch keine Teile über die Kontur des Halterschaftes hinausragen.

Nachstehend wird die Erfindung anhand der Zeichnungen beschrieben.
- Fig. 1a: zeigt in perspektivischer Darstellung einen Stechstahlhalter mit herausgenommener Schneidplatte und gelockerter Klemmpratze,
- Fig. 1b: eine Darstellung gemäß Figur 1a mit eingespannter Schneidplatte,
- Fig. 2: einen Schnitt gemäß der Linie II-II in Fig. 1b,
- Fig. 2a: einen Schnitt durch die Nase des Klemmfingers gemäß der Linie IIa-IIa in Fig. 2,
- Fig. 2b: einen Schnitt gemäß der Linie II-II in Figur 1b mit durchgehender Nut im Spannkopf,

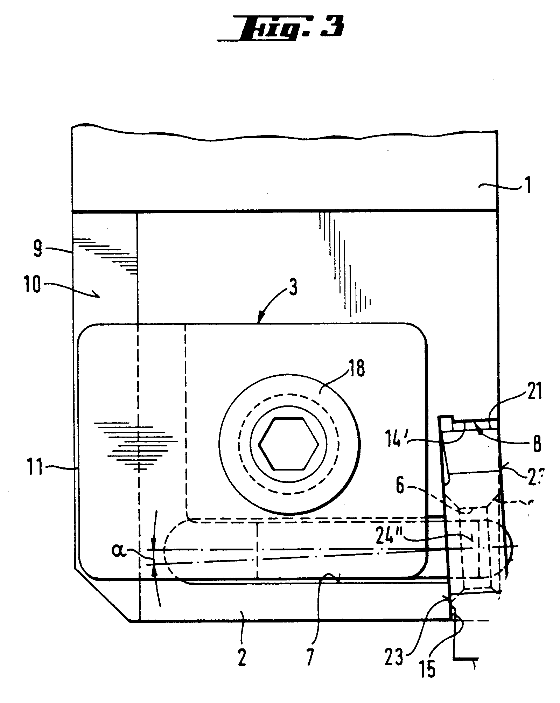

- Fig. 3: eine Ansicht gemäß Pfeil III in Fig. 1b,

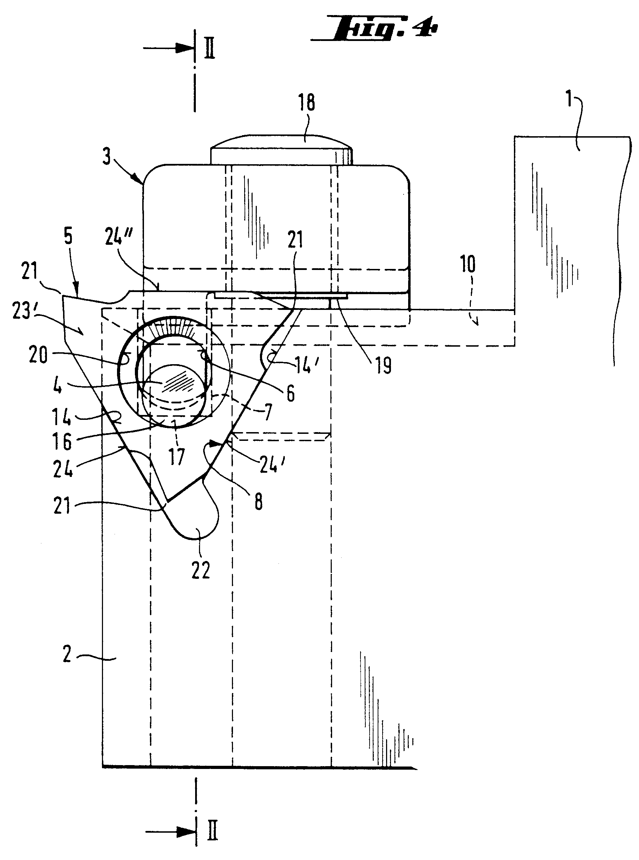

- Fig. 4: eine Ansicht gemäß Pfeil IV in Fig. 1b.

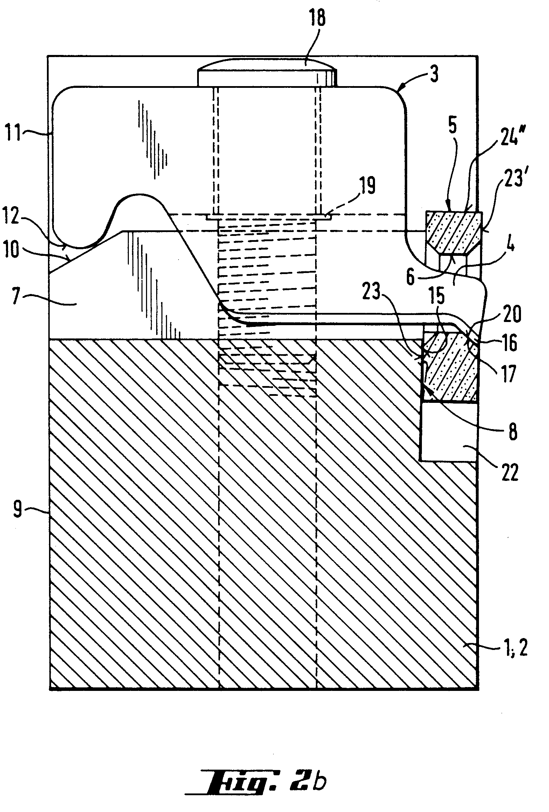

Der Halterschaft (1) zeigt an seinem vorderen Ende den Spannkopf (2), der die Klemmpratze (3) mit dem Spannfinger (4) aufnimmt. In der Ausnehmung (8) ruht die Wendeschneidplatte (5), durch deren Bohrung (6) der Spannfinger (4) mit seiner Nase (16) greift, wobei nach Anziehen der Spannschraube (18) die mittels eines Sprengringes (19) unverlierbar mit der Klemmpratze (3) verbunden ist, die Innenfläche (17) der Nase (16) auf der Aussenkung (20) der Bohrung (6) der Wendeschneidplatte (5) ruht Der Spannfinger (4) wird dabei in der Nut (7) im Spannkopf (2) versenkt. Auf der ihm gegenüberliegenden Seite (9) des Spannkopfes (2) ist eine Schräge (10) angeordnet, die unter einem Winkel von 30 Grad zur Seite (9) verläuft. Die Nut (7) ist alternativ gemäß Fig. 2b durchgehend von der Auflagefläche zur gegenüberliegenden Seite (9) ausgeführt. Die Klemmpratze (3) ist so ausgerichtet, daß der Spannfinger (4) und damit die Nut (7) mit der Mittellinie der Bohrung (6) in der Wendeschneidplatte (5) einen Winkel α von 2° bildet.

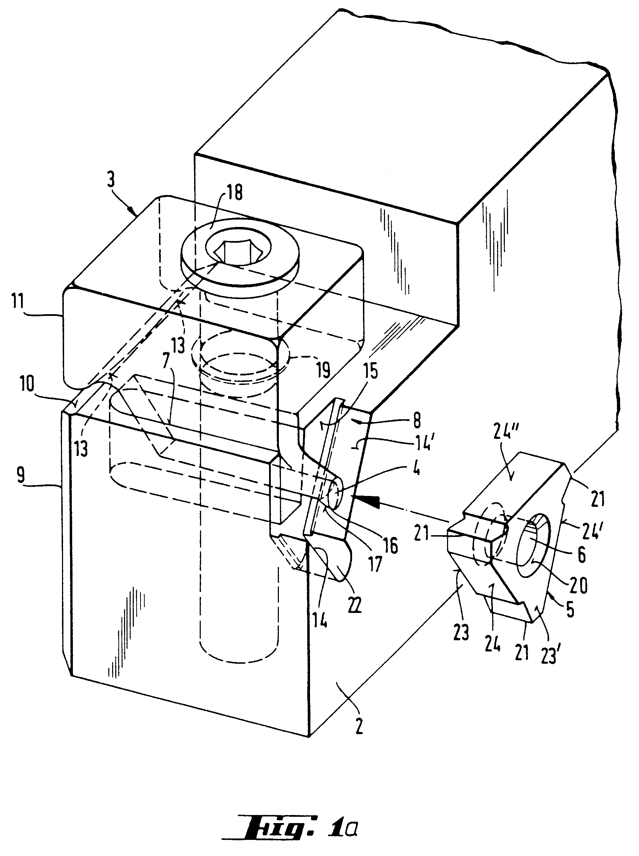

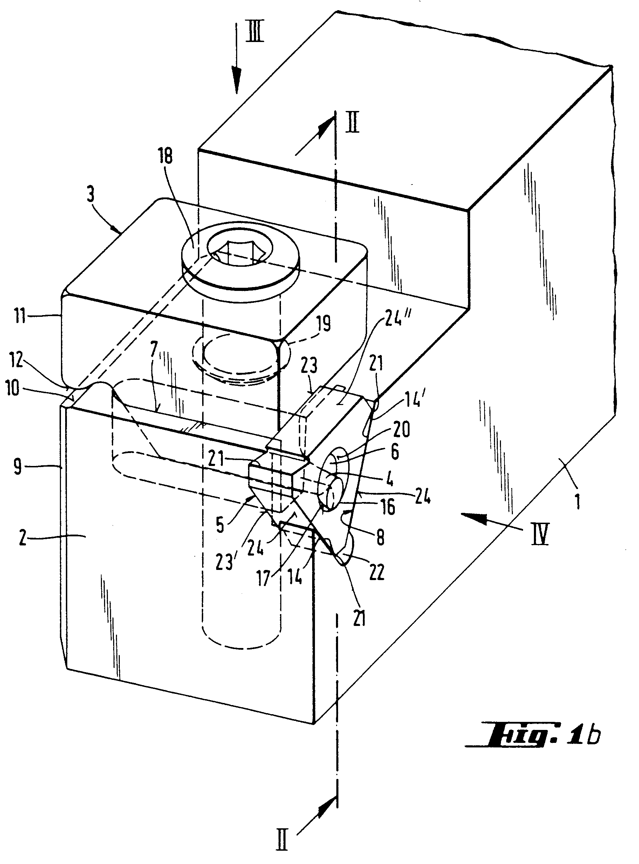

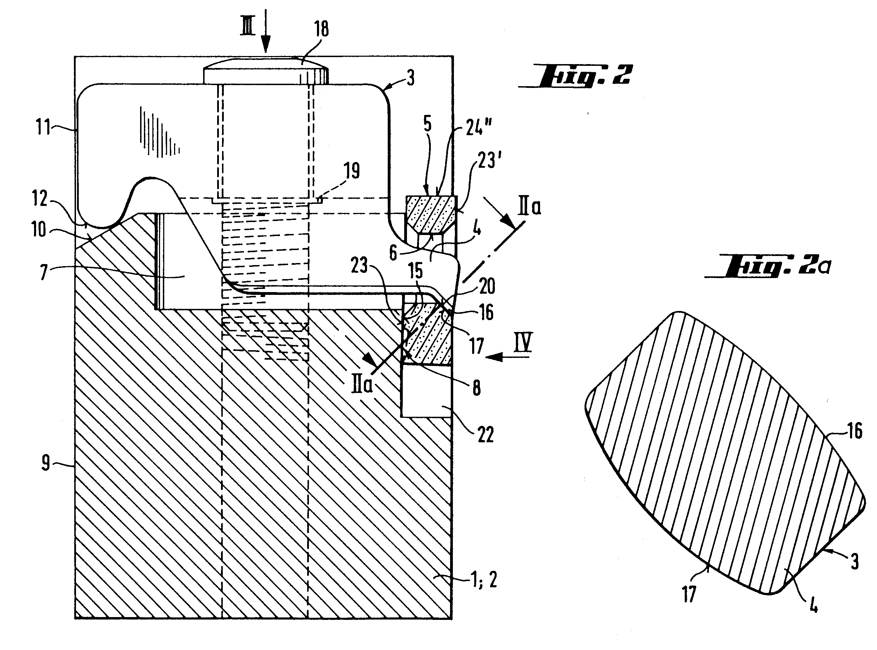

Der hintere Bereich (11) der Klemmpratze (3) weist einen Gleitansatz auf, der in Fig. 2 als Halbzylinder (12), in Fig. 1a als ballige Halbtonne (13) ausgeführt ist. Die seitlichen Führungen (14, 14') der Ausnehmung (8) im Spannkopf (2) verlaufen unter dem Winkel zueinander, der der Geometrie der Schneidplatte entspricht. Dargestellt ist ein Winkel von 60 Grad für eine Dreikantschneidplatte. Denkbar sind jedoch auch andere Geometrien für Vierkant- oder Fünfkantplatten. Auch bei diesen Platten ist dann jedoch darauf zu achten, daß für die Schneidkanten (21) der Wendeschneidplatte (5) jeweils ein Freiraum (22) zur Verfügung steht, damit die Schneidkanten (21) nicht beschädigt werden.

Nach dem Einlegen der Wendeschneidplatte (5) in die Ausnehmung (8) liegt eine der Deckflächen (23, 23') am Boden der Ausnehmung, also der Auflage (15) an. Zwei der Umfangsflächen (24, 24', 24'') stehen dann mit der seitlichen Führung (14) bzw. (14') in Eingriff.

## Patentansprüche

1. Schneidwerkzeug zum Einstechen, Abstechen oder Gewindeschneiden, bestehend aus einem Schneidplattenhalter mit einer Ausnehmung zur Aufnahme einer Wendeschneidplatte im Bereich seines Spannkopfes sowie einer als Vielkantplatte ausgeführten Wendeschneidplatte mit konisch ausgesenkter Befestigungsbohrung, die hochkant in der Ausnehmung angeordnet und über eine Spannvorrichtung mit dem Spannkopf des Schneidplattenhalters verbunden ist, wobei die Spannvorrichtung eine Klemmpratze (3) mit hakenförmig ausgebildetem Spannfinger (4) ist, dadurch gekennzeichnet, daß die Klemmpratze durch eine in den Spannkopf (2) eingebrachte Nut (7) in die Bohrung (6) der Wendeschneidplatte (5) eingreift.

2. Schneidwerkzeug nach Anspruch 1, dadurch gekennzeichnet, daß der Spannfinger (4) im Spannkopf (2) versenkt ist und unter einem Winkel α zur Mittellinie der in der Wendeschneidplatte (5) eingebrachten Bohrung (6) verläuft.

3. Schneidwerkzeug nach einem der Ansprüche 1 oder 2, dadurch gekennzeichnet, daß der Winkel α > 1 Grad und ≤ 10 Grad ist.

4. Schneidwerkzeug nach einem der Ansprüche 1 bis 3, dadurch gekennzeichnet, daß der Spannkopf (2) auf der der Ausnehmung (8) gegenüberliegenden Seite (9) eine Schräge (10) aufweist.

5. Schneidwerkzeug nach einem der Ansprüche 1 bis 4, dadurch gekennzeichnet, daß die Klemmpratze (3) in ihrem hinteren Bereich (11) mit einem Gleitansatz versehen ist.

6. Schneidwerkzeug nach einem der Ansprüche 1 bis 5, dadurch gekennzeichnet, daß der Gleitansatz ein Halbzylinder (12) ist.

7. Schneidwerkzeug nach einem der Ansprüche 1 bis 5, dadurch gekennzeichnet, daß der Gleitansatz eine Halbtonne (13) ist.

8. Schneidwerkzeug nach einem der Ansprüche 1 bis 7, dadurch gekennzeichnet, daß die Schräge (10) eine gewölbte Fläche ist.

9. Schneidwerkzeug nach einem der Ansprüche 1 bis 8, dadurch gekennzeichnet, daß der Spannfinger (4) eine nach unten abgewinkelte Nase (16) aufweist, deren Innenfläche (17) mit der Aussenkung (20) der Bohrung (6) der Wendeschneidplatte (5) in Verbindung steht.

10. Schneidwerkzeug nach einem der Ansprüche 1 bis 9, dadurch gekennzeichnet, daß die Innenfläche (17) der Nase (16) des Spannfingers (4) gewölbt ist.

11. Schneidwerkzeug nach einem der Ansprüche 1 bis 10, dadurch gekennzeichnet, daß die Klemmpratze (3) im Spannkopf (2) versenkt ist.

## Claims

1. Cutting tool for plunge-cutting, parting off or thread cutting, comprising a cutting-tool tip holder having a recess for receiving a throw-away cutting-tool tip in the region of its chucking head, as well as a throw-away cutting-tool tip which is designed as a polygonal tip, has a conically countersunk fastening bore, is arranged on edge in the recess and is connected to the chucking head of the cutting-tool tip holder via a chucking device, the chucking device being a clamping claw (3) having a chucking finger (4) designed in the form of a hook, characterized in that the clamping claw engages through a groove (7) made in the chucking head (2) into the bore (6) of the throw-away cutting-tool tip (5).

2. Cutting tool according to Claim 1, characterized in that the chucking finger (5) is countersunk in the chucking head (2) and runs at an angle α to the centre line of the bore (6) made in the throw-away cutting-tool tip (5).

3. Cutting tool according to one of Claims 1 or 2, characterized in that the angle α is > 1 degree and ≤ 10 degrees.

4. Cutting tool according to one of Claims 1 to 3, characterized in that the chucking head (2) has a bevel (10) on the side (9) opposite the recess (8).

5. Cutting tool according to one of Claims 1 to 4, characterized in that the clamping claw (3) is provided in its rear region (11) with a sliding shoulder.

6. Cutting tool according to one of Claims 1 to 5, characterized in that the sliding shoulder is a half-cylinder (12).

7. Cutting tool according to one of Claims 1 to 5, characterized in that the sliding shoulder is a half-barrel (13).

8. Cutting tool according to one of Claims 1 to 7, characterized in that the bevel (10) is a curved surface.

9. Cutting tool according to one of Claims 1 to 8, characterized in that the chucking finger (4) has a lug (16) which is angled off downwards, the inner surface (17) of which is in connection with the countersinking (20) of the bore (6) of the throw-away cutting-tool tip (5).

10. Cutting tool according to one of Claims 1 to 9, characterized in that the inner surface (17) of the lug (16) of the chucking finger (4) is curved.

11. Cutting tool according to one of Claims 1 to 10, characterized in that the clamping claw (3) is countersunk in the chucking head (2).

## Revendications

1. Outil de coupe à saigner, à tronçonner ou à décolleter, ou à fileter, comprenant un porte-outil qui, dans la région de sa tête de serrage, est pourvu d'un logement pour le montage d'une plaquette de coupe amovible ainsi qu'une plaquette de coupe amovible qui se présente sous la forme d'une plaquette polygonale pourvue d'un trou de fixation avec un lamage conique, est disposée sur chant dans le logement et est liée par l'intermédiaire d'un dispositif de serrage à la tête de serrage du porte-outil, le dispositif de serrage étant une bride (3) de serrage pourvue d'un doigt de blocage (4) en forme de griffe, caractérisé par le fait que la bride de serrage pénètre par une rainure (7) aménagée dans la tête (2) de serrage dans le trou (6) de la plaquette de coupe (5) amovible.

2. Outil de coupe selon la revendication 1, caractérisé par le fait que le doigt de blocage (4) est encastré dans la tête (2) de serrage et forme un angle α avec l'axe du trou (6) prévu dans la plaquette de coupe (5) amovible.

3. Outil de coupe selon l'une des revendications 1 ou 2, caractérisé par le fait que l'angle α est > 1 degré et < 10 degrés.

4. Outil de coupe selon l'une des revendications 1 à 3, caractérisé par le fait que la tête (2) de serrage, sur sa face (9) opposée au logement (8), présente une surface inclinée (10).

5. Outil de coupe selon l'une des revendications 1 à 4, caractérisé par le fait que la bride (3) de serrage, dans sa région arrière (11), est pourvue d'un talon de glissement.

6. Outil de coupe selon l'une des revendications 1 à 5, caractérisé par le fait que le talon de glissement est un demi cylindre (12).

7. Outil de coupe selon l'une des revendications 1 à 5, caractérisé par le fait que le talon de glissement est un demi tonneau (12).

8. Outil de coupe selon l'une des revendications 1 à 7, caractérisé par le fait que la surface inclinée (10) est une surface bombée.

9. Outil de coupe selon l'une des revendications 1 à 8, caractérisé par le fait que le doigt de blocage (4) comporte une saillie (16) coudée vers le bas, dont la surface intérieure (17) est en contact avec le lamage (20) du trou (6) de la plaquette de coupe (5) amovible..

10. Outil de coupe selon l'une des revendications 1 à 9, caractérisé par le fait que la surface intérieure (17) de la saillie (16) du doigt de blocage (4) est bombée.

11. Outil de coupe selon l'une des revendications 1 à 10, caractérisé par le fait que la bride (3) de serrage est encastrée dans la tête (2) de serrage.
